# EUROPÄISCHE PATENTSCHRIFT

(11) **EP 0 666 098 B1**
(45) Veröffentlichungstag und Bekanntmachung des Hinweises auf die Patenterteilung: **10.09.1997**
(21) Anmeldenummer: 95200037.0
(22) Anmeldetag: 10.01.1995
(51) Int. Cl.: B01D 53/12, B01D 53/10, B01D 53/02, B01D 53/64, B01D 53/70

(54) **Verfahren zur Reinigung von Verbrennungsabgasen**
Process for the purification of combustion exhaust gases
Procédé pour la purification de gaz de combustion

(30) Priorität: 03.02.1994 DE 4403244
(43) Veröffentlichungstag der Anmeldung: 09.08.1995
(73) Patentinhaber: METALLGESELLSCHAFT AG, 60323 Frankfurt am Main (DE)
(72) Erfinder: Herden, Hansjörg, Dr., D-63110 Rodgau (DE); Mayer-Schwinning, Gernot, D-61352 Bad Homburg (DE); Böning, Günter, D-60388 Frankfurt am Main (DE)

(56) Entgegenhaltungen:
- EP-A- 0 412 591
- EP-A- 0 479 350
- EP-A- 0 555 921
- US-A- 3 755 989
- US-A- 4 765 908
- FABRIC FILTER NEWSLETTER, April 1994, No. 222, Seite 4

## Beschreibung

Die Erfindung betrifft ein Verfahren zur Reinigung von sauerstoffhaltigen, bei der Verbrennung von Müll, Industrieabfällen und Klärschlamm anfallenden Abgasen, bei dem Quecksilber, Quecksilberverbindungen und polyhalogenierte Kohlenwasserstoffe durch Adsorption an Zeolithen aus den Abgasen entfernt werden.

Wegen der unterschiedlichen und wechselnden Zusammensetzung von Müll, Industrieabfällen und Klärschlamm sind auch die bei der Verbrennung dieser Abfälle entstehenden Abgase mit unterschiedlichen Mengen umweltbelastender Substanzen verunreinigt. Alle Verunreinigungen müssen weitgehend aus den Verbrennungsabgasen entfernt werden, bevor die Abgase in die Atmosphäre entlassen werden können, denn sehr viele Verunreinigungen entfalten bereits in geringer Konzentration toxische Wirkungen gegenüber Menschen, Tieren und Pflanzen. Die bei der Abfallverbrennung anfallenden Abgase sind insbesondere mit Staub, SO₂, HCl, HF, Hg, Quecksilberverbindungen, Schwermetallverbindungen, polyhalogenierten Dibenzodioxinen und Dibenzofuranen, polychlorierten Biphenylen (PCB), polychlorierten Phenolen (PCP) und polychlorierten Aromaten (PCA) verunreinigt. Da die Abfälle mit einem stöchiometrischen Überschuß an Sauerstoff verbrannt werden, enthalten die Verbrennungsabgase 2 bis 12 Vol.-% O₂ pro Nm³.

Der Staub, der in den Abgasen in einer Menge bis zu 50 000 mg/Nm³ vorliegt, wird in Zyklonen, Elektrofiltern, Gewebefiltern oder Wäschern abgeschieden, wobei das zu entstaubende Abgas auch mehrere dieser Apparate durchlaufen kann. Die bekannten Entstaubungsverfahren lassen heute auch im großtechnischen Maßstab Reststaubgehalte von < 5 mg/Nm³ zu. Eine möglichst weitgehende Entstaubung ist deshalb erforderlich, weil der Staub vor allem toxisch wirkende Schwermetalle, Schwermetallverbindungen und polyhalogenierte Dibenzodioxine und Dibenzofurane adsorbiert.

SO₂ und HCl liegen in den Abgasen in einer Menge von jeweils bis zu 3000 mg/Nm³ vor; außerdem ist HF in Mengen bis zu 100 mg/Nm³ vorhanden. Diese gasförmigen Verbindungen bilden mit dem in der Atmosphäre enthaltenen Wasserdampf Säuren, die sehr häufig als Aerosole vorliegen, und haben eine toxische Wirkung. Sie werden daher weitgehend abgetrennt, wobei mit den bekannten Reinigungsverfahren im technischen Maßstab SO₂-Restgehalte < 20 mg/Nm³, HCl-Restgehalte < 5 mg/Nm³ und HF-Restgehalte < 1 mg/Nm³ verwirklicht werden können. Zur Abscheidung von SO₂, HCl und HF werden trocken, quasitrocken und naß arbeitende Reinigungsverfahren eingesetzt, wobei auch mehrere Verfahren hintereinander geschaltet werden können. Bei diesen Verfahren wird als Reaktionsmittel vor allem Ca(OH)₂, CaO, CaCO₃, NaOH und/oder Na₂CO₃ verwendet. Besondere Bedeutung hat die Sprühabsorption erlangt, bei der eine wäßrige Suspension von Ca(OH)₂ mit den sauren Schadstoffen SO₂, HCl und HF reagiert, das Wasser verdampft und ein festes Reaktionsprodukt anfällt, das auch Staub und andere Schadstoffe enthält. Daneben sind Waschverfahren bekannt, die eine sehr weitgehende Abscheidung der Schadstoffe SO₂, HCl und HF zulassen.

Die Schwermetalle und die Schwermetallverbindungen, vor allem Quecksilber und Quecksilberverbindungen, sowie die polyhalogenierten Kohlenwasserstoffe liegen in den Verbrennungsabgasen in geringerer Konzentration vor. Diese Substanzen wirken allerdings extrem toxisch und müssen daher nahezu quantitativ aus den Abgasen entfernt werden, was nach dem Stand der Technik vorzugsweise durch Adsorptionsverfahren und/oder Waschverfahren erfolgt. Als Adsorptionsmittel haben sich insbesondere Aktivkohle und Zeolithe bewährt, während die Waschverfahren sowohl im sauren als auch im alkalischen Bereich arbeiten.

Die technische Anwendbarkeit der bekannten Abgasreinigungsverfahren hängt insbesondere davon ab, daß sie möglichst geringe Investitions- und Betriebskosten verursachen und daß sie Verfahrensprodukte liefern, die in möglichst geringer Menge anfallen sowie entweder ohne größere Schwierigkeiten deponiert oder nach einer Regeneration in die Reinigungsprozesse zurückgeführt werden. Um einen möglichst großen Abscheidegrad für die vorgenannten Verunreinigungen zu erzielen, ist es üblich, daß mehrere Reinigungsverfahren miteinander kombiniert werden. Die vorliegende Erfindung hat sich das Ziel gestellt, als Adsorptionsmittel Zeolithe zu benutzen, um die Verwendung von Aktivkohle als Adsorptionsmittel sowie die damit einhergehenden Gefahren für die Betriebssicherheit der Adsorptionsanlagen zu vermeiden. Ferner hat sich die Erfindung das Ziel gesetzt, ein Adsorptionsverfahren zu schaffen, das mit den bekannten Prozessen der Entstaubung und der Abscheidung saurer Schadstoffe vorteilhaft kombiniert werden kann.

Aus der DE-A-40 12 982 ist ein Verfahren zur Reinigung von Gasen und Abgasen von anorganischen und organischen Schadstoffen bekannt, bei dem feinpulveriges, aktiviertes Aluminiumoxid, Kieselgel, Kieselgur, feinpulverige Zeolithe und/oder ähnliche anorganische Stoffe in den Gasstrom eingeblasen, Gas und Feststoff durchmischt, die Feststoffe auf ein Flächenfilter aufgetragen, als erneuerbare, lockere, hinreichend tiefe Adsorptionsschicht auf dem Filter belassen und die Feststoffe von dort mechanisch, mit Schadstoffen beladen, entfernt werden. Bei dem bekannten Verfahren ist ferner vorgesehen, daß die oberflächenaktiven, anorganischen Substanzen als feinpulveriges Material eingesetzt werden, deren Kornverteilung zu 100 % < 100 µm, vorzugsweise 50 µm, ist. Ferner ist nach dem bekannten Verfahren vorgesehen, daß die oberflächenaktiven Stoffe mit Schwefel, Sulfiden oder schwefelabgebenden Substanzen zur Bindung von flüchtigen Schwermetallen und/oder mit Schwermetallen oder Schwermetallverbindungen, z.B. Vanadium, Wolfram, Molybdän, Mangan, Eisen, Nickel, Kobalt, Chrom, Kupfer, Zinn, Zink und/oder Titan, zur Beschleunigung von Oxidations- oder Reduktionsreaktionen beaufschlagt sind. Schließlich wird in der DE-A-40 12 982 vorgeschlagen, das bekannte Verfahren zur Abscheidung von Quecksilber, Kadmium, Arsen, Antimon, Thallium und/oder von PCB's, CKW's, Dioxinen/Furanen und/oder PAK's einzusetzen.

Aus der DE-A-39 19 124 ist ein Verfahren zur Abscheidung von gesundheitsschädigenden polyzyklischen Kohlenwasserstoffen (z.B. Dioxine und Furane) und Schwermetallen aus Abgasen von Abfallverbrennungsanlagen bekannt, bei dem die von Staub, HCl, HF, SOₓ, NOₓ und Schwermetallen vorgereinigten Abgase durch Adsorption/Filtration im Temperaturbereich von 70 bis 160°C von den restlichen polyzyklischen Kohlenwasserstoffen und Schwermetallen befreit werden. Bei diesem Verfahren ist vorgesehen, daß die vorgereinigten Abgase zuerst in einem Reaktor mit fein verteilten Adsorptionsmitteln vermischt und anschließend zu einem filtrierenden Abscheider geführt werden, wo auf dem Filtergewebe ein Adsorptionsmittelkuchen erzeugt wird, den die Abgase durchströmen. Hierbei erfolgt eine weitgehende Abscheidung von polyzyklischen Kohlenwasserstoffen und Schwermetallen. Das bekannte Verfahren benutzt als Adsorptionsmittel z.B. Aktivkohle, Molekularsiebe, Natriumsulfid und Kalkhydrat.

Schließlich ist aus der DE-A-41 28 106 ein Verfahren zur selektiven Abtrennung von hochkondensierten, polyzyklischen Kohlenwasserstoffen, insbesondere von halogenierten Dibenzodioxinen und Dibenzofuranen, aus vorentstaubten, SO₂-, H₂O- und schwermetallhaltigen Abgasen durch Adsorption der Kohlenwasserstoffe an festen Adsorptionsmitteln bekannt, bei dem als Adsorptionsmittel ein dealuminierter Zeolith mit einem SiO₂/Al₂O₃-Verhältnis von 20 : 1 bis 1000 : 1 zum Einsatz kommt, die Adsorption bei einer Temperatur von 20 bis 200°C erfolgt, der Zeolith einen Teilchendurchmesser von 1 bis 5 mm hat und in einem Festbettreaktor oder einem Reaktor mit bewegtem Bett angeordnet ist.

Es hat sich gezeigt, daß die bekannten Reinigungsverfahren wegen der gestiegenen Anforderungen an die Reinigungsleistung verbessert werden müssen. Daher liegt der Erfindung die Aufgabe zugrunde, ein Verfahren zur Reinigung der bei der Verbrennung von Müll, Industrieabfällen und Klärschlamm anfallenden Abgase zu schaffen, das auch bei Schwankungen der einzelnen Schadstoffkonzentrationen zuverlässig die Einhaltung von niedrigen Schadstoffkonzentrationen im Reingas gestattet und das wirtschaftlich arbeitet. Das Verfahren muß insbesondere gewährleisten, daß das Reingas eine Hg-Konzentration < 50 µg/Nm³, eine Konzentration an polyhalogenierten Dibenzodioxinen und Dibenzofuranen von < 0,1 ng TE pro Nm³ und eine Konzentration an PCB, PCP und PCA von insgesamt < 1 µg/Nm³ hat (TE = Toxizitäts-Äquivalente gemäß NATO-Standard).

Die der Erfindung zugrundeliegende Aufgabe wird dadurch gelöst, daß die Abgase oberhalb des Taupunkts bei einer Temperatur von 80 bis 180°C und einer Gasgeschwindigkeit von 3 bis 20 m/s mit einer Mischung aus natürlich vorkommenden Zeolithen während einer Reaktionszeit von 0,5 bis 10 s in einer Gas-Feststoff-Suspension zur Reaktion gebracht werden, wobei die mittlere Teilchengröße d₅₀ der Zeolith-Mischung 5 bis 50 µm und die mittlere Suspensionsdichte der Gas-Feststoff-Suspension 0,02 bis 10 kg Feststoff pro Nm³ Abgas beträgt. Mit dem erfindungsgemäßen Verfahren kann im Reingas zuverlässig eine Hg-Konzentration < 50 µg/Nm³, eine Konzentration an polyhalogenierten Dibenzodioxinen und Dibenzofuranen < 0,1 ng TE pro Nm³ sowie eine Konzentration an PCB, PCP und PCA von insgesamt < 1 µg/Nm³ eingehalten werden.

Das erfindungsgemäße Verfahren hat eine besonders gute Adsorptionsleistung, wenn das Abgas bei einer Temperatur von 120 bis 140°C mit einer Mischung aus natürlich vorkommenden Zeolithen zur Reaktion gebracht wird und wenn die Mischung aus natürlich vorkommenden Zeolithen 10 bis 20 Gew.-% Mordenit, 60 bis 70 Gew.-% Clinoptilolit, 0 bis 5 Gew.-% Montmorillonit und Rest SiO₂ enthält. Bei diesen Verfahrensbedingungen werden die vorgenannten Schadstoffkonzentrationen im Reingas zuverlässig eingehalten und darüber hinaus im Regelfall unterschritten.

Eine weitere Verbesserung der Adsorptionsleistung des erfindungsgemäßen Verfahrens wird dadurch erreicht, daß die Mischung aus natürlich vorkommenden Zeolithen mit 0,1 bis 1 Gew.-% MnSO₄, FeSO₄, CoSO₄, NiSO₄ und/oder CuSO₄ dotiert ist. Das Aufbringen der Metallsalze verbessert insbesondere die Quecksilberabscheidung.

Noch im Abgas enthaltene geringe Mengen an sauren Schadstoffen - also an SO₂, HCl und HF - werden entsprechend der Erfindung dadurch abgeschieden, daß die Mischung aus natürlich vorkommenden Zeolithen 10 bis 30 Gew.-% CaCO₃, CaO und/oder Ca(OH)₂ enthält. CaCO₃, CaO und Ca(OH)₂ können auch in Form verunreinigter Mischungen eingesetzt werden, wie sie z.B. in einem Sprühabsorber anfallen.

Das erfindungsgemäße Verfahren wird zum einen in der Weise durchgeführt, daß die Reaktion in einer zirkulierenden Wirbelschicht abläuft, wobei die Gasgeschwindigkeit 3 bis 8 m/s, vorzugsweise 4 bis 5 m/s, und die mittlere Suspensionsdichte der Gas-Feststoff-Suspension 2 bis 10 kg Feststoff pro Nm³ Abgas beträgt. Diese Verfahrensweise ermöglicht auch dann eine zuverlässige Reinigung der bei der Abfallverbrennung anfallenden Abgase, wenn in der Verbrennungsanlage unterschiedliche Abfallmengen verbrannt werden.

Die zirkulierende Wirbelschicht ist als Zirkulationssystem gestaltet, das aus einem Reaktor, einem Feststoff-Abscheider und einer Feststoff-Rückführleitung besteht. Die zirkulierende Wirbelschicht zeichnet sich dadurch aus, daß - im Unterschied zur "klassischen" Wirbelschicht, bei der eine dichte Phase durch einen deutlichen Dichtesprung von dem darüber befindlichen Gasraum getrennt ist - Verteilungszustände ohne definierte Grenzschicht vorliegen. Ein Dichtesprung zwischen dichter Phase und darüber befindlichem Gasraum ist bei einer zirkulierenden Wirbelschicht nicht existent; jedoch nimmt innerhalb des Reaktors die Feststoffkonzentration von unten nach oben ständig ab. Die Betriebsbedingungen einer zirkulierenden Wirbelschicht sind bekanntlich über die Kennzahlen von Froude und Archimedes bestimmt.

Alternativ ist nach der Erfindung vorgesehen, daß die Reaktion in einem Flugstromreaktor abläuft, wobei die Gasgeschwindigkeit 6 bis 20 m/s und die mittlere Suspensionsdichte der Gas-Feststoff-Suspension 20 bis 200 g Feststoff pro Nm³ Abgas beträgt. Ein Flugstromreaktor kann vorteilhaft bei der Reinigung von kleineren Abgasvolumina zum Einsatz kommen.

Nach der Erfindung ist vorgesehen, daß die mit den Schadstoffen beladene Zeolith-Mischung bei 300 bis 600°C in einer Wirbelschicht mit Luft als Wirbelgas behandelt und die aus der Wirbelschicht austretende Luft zur Abscheidung des Quecksilbers auf Raumtemperatur abgekühlt wird. Durch diese Maßnahme kann die Zeolith-Mischung zumindest teilweise regeneriert und in den Verfahrenskreislauf zurückgeführt werden, wobei als Wertstoff Quecksilber gewonnen wird. Diese Verfahrensvariante kommt insbesondere dann zur Anwendung, wenn die Zeolith-Mischung CaCO₃, CaO und/oder Ca(OH)₂ - und damit auch deren Reaktionsprodukte - enthält.

Nach der Erfindung ist alternativ vorgesehen, daß die mit den Schadstoffen beladene Zeolith-Mischung bei 800 bis 1300°C in einer Wirbelschicht mit Luft als Wirbelgas behandelt und die aus der Wirbelschicht austretende Luft zur Abscheidung des Quecksilbers auf Raumtemperatur gekühlt wird. Nach dieser Verfahrensvariante wird nicht nur das Quecksilber aus der Zeolith-Mischung entfernt, sondern es werden auch die adsorbierten Kohlenwasserstoffe vollständig zersetzt. Bei dieser Regenerationsmethode ist allerdings darauf zu achten, daß die Adsorptions-Aktivität der Zeolith-Mischung nicht durch Anwendung zu hoher Regenerationstemperaturen zerstört wird.

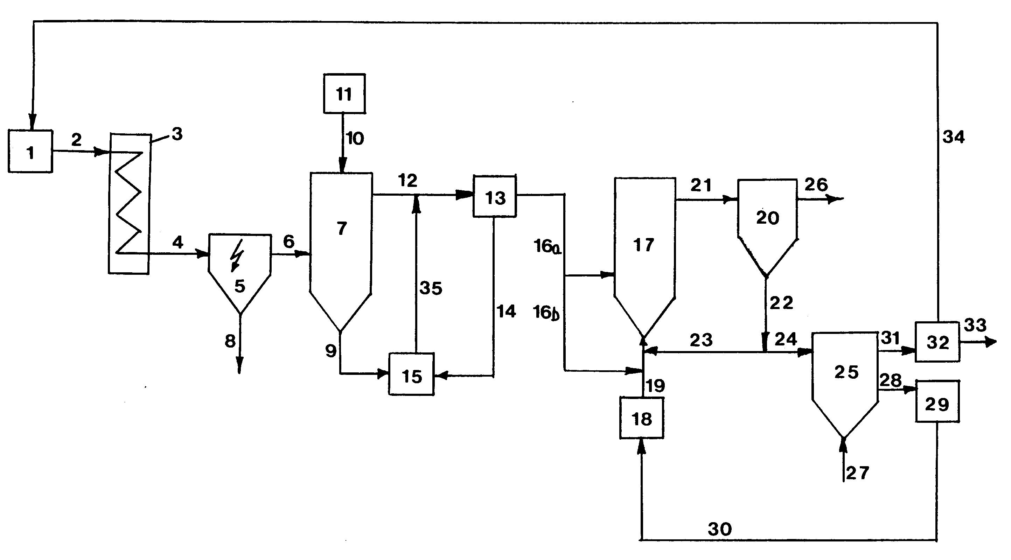

Der Gegenstand der Erfindung wird nachfolgend anhand der Zeichnung und eines Ausführungsbeispiels näher erläutert. In der Zeichnung ist das Fließbild des erfindungsgemäßen Verfahrens dargestellt, wobei der Adsorptionsprozeß in einer zirkulierenden Wirbelschicht abläuft.

Aus der Müllverbrennungsanlage (1), in der Hausmüll, Klärschlamm und Industrieabfälle verbrannt werden, tritt das Verbrennungsabgas, das Staub und gasförmige Schadstoffe enthält, mit einer Temperatur von 800 bis 1000°C aus. Dieses Abgas gelangt über die Leitung (2) in den zur Energiegewinnung genutzten Wärmeaustauscher (3), wo es auf eine Temperatur von 200 bis 300°C abgekühlt wird. Das abgekühlte Abgas wird über die Leitung (4) in den Elektroabscheider (5) geführt, wo bei einer Temperatur von 200 bis 300°C eine weitgehende Entstaubung stattfindet. Die im Elektroabscheider (5) abgeschiedene staubförmige Flugasche wird über die Leitung (8) abgeführt, während das teilweise entstaubte Abgas über die Leitung (6) in den Sprühabsorber (7) gelangt.

Dem Sprühabsorber (7) wird aus dem Vorratstank (11) über die Leitung (10) eine Suspension zugeführt, die aus Wasser und Ca(OH)₂ besteht. Im Sprühabsorber (7) verdampft das Wasser, und dadurch kühlt sich das Abgas auf eine Temperatur von ca. 130°C ab. Gleichzeitig reagieren insbesondere die gasförmigen sauren Schadstoffe SO₂, HCl und HF mit dem Ca(OH)₂ unter Bildung der entsprechenden Calciumsalze. Diese Salze, das nicht umgesetzte Ca(OH)₂ sowie die restliche staubförmige Flugasche werden über die Leitung (9) aus dem Sprühabsorber (7) abgeführt. Die aus dem Sprühabsorber (7) über die Leitung (12) austretenden Abgase enthalten noch staubförmige Feststoffe, die aus nicht umgesetztem Ca(OH)₂, aus Calciumsalzen der sauren gasförmigen Schadstoffe und aus staubförmiger Flugasche bestehen. Diese Feststoffe werden im Gewebefilter (13) aus dem Abgas abgetrennt und gelangen über die Leitung (14) in den Vorratsbunker (15), wo sie mit den über die Leitung (9) aus dem Sprühabsorber (7) ausgetragenen Feststoffen vereinigt werden. Das im Vorratsbunker (15) gesammelte Material hat die gleiche Beschaffenheit. Um auf dem Gewebefilter (13) einen Filterkuchen schnell aufbauen zu können, wird in die Leitung (12) über die Leitung (35) ein Teil der im Vorratsbunker (15) befindlichen Feststoffe eingebracht. Die Abkühlung und die Entstaubung des Verbrennungsabgases, die Abscheidung der sauren, gasförmigen Schadstoffe aus dem Verbrennungsabgas in einem Sprühabsorber sowie die nachfolgende Entstaubung der Verbrennungsabgase in einem Gewebefilter gehören zum bekannten Stand der Technik.

Aus dem Gewebefilter (13) tritt ein weitgehend gereinigtes Abgas aus, das eine Temperatur von ca. 130°C hat, und gelangt über die Leitung (16a) als Sekundärgas sowie über die Leitung (16b) als Primärgas in den Wirbelschichtreaktor (17). Dem in der Leitung (16b) geführten Primärgas wird aus dem Vorratsbunker (18) über die Leitung (19) eine Mischung aus natürlichen Zeolithen zugeführt, die aus 20 Gew.-% Mordenit, 70 Gew.-% Clinoptilolit, 5 Gew.-% Montmorillonit und Rest SiO₂ besteht. Die Zeolith-Mischung hat eine mittlere Teilchengröße d₅₀ von ca. 25 µm. Im Wirbelschichtreaktor (17) wird eine Gas-Feststoff-Suspension erzeugt, die sich im Zustand einer zirkulierenden Wirbelschicht befindet. Die mittlere Suspensionsdichte beträgt im Wirbelschichtreaktor (17) zwischen dem Eintritt des Sekundärgases und dem Gasaustritt in den Zyklon (20) ca. 3 kg pro m³. Im Wirbelschichtreaktor (17) befindet sich eine größere Menge der Zeolith-Mischung, von der nur ein kleiner Teil mit dem Gasstrom über die Leitung (21) in den Zyklon (20) ausgetragen wird. Im Zyklon (20) erfolgt die Trennung der Gas-Feststoff-Suspension, wobei die Feststoffteilchen über die Leitung (22) aus dem Zyklon (20) entnommen werden. Ein Teil der Feststoffe wird über die Leitungen (23) und (16b) in den Wirbelschichtreaktor (17) zurückgeführt, der andere Teil der Feststoffe gelangt über die Leitung (24) in den Wirbelbettreaktor (25). Das gereinigte Abgas verläßt den Zyklon (20) über die Leitung (26) und wird mit einer Temperatur von ca. 120°C über einen Kamin in die Atmosphäre entlassen, wobei restliche Staubanteile in einem dem Zyklon (20) nachgeschalteten Filter abgeschieden werden können, der in der Zeichnung nicht dargestellt ist.

Im Reaktor (25) wird die mit Schadstoffen beladene Zeolith-Mischung bei einer Temperatur von 800 bis 900°C regeneriert. Als Wirbelgas wird Luft verwendet, die über die Leitung (27) in den Reaktor (25) gelangt. Ein Teil der Feststoffe wird dem Reaktor (25) über die Leitung (28) entnommen und nach einer Kühlung im Feststoffkühler (29) über die Leitung (30) dem Vorratsbunker (18) zugeführt. Der Feststoffkühler (29) wird als Kühlmedium mit der Luft betrieben, die über die Leitung (27) in den Reaktor (25) gelangt; dieser Kühlkreislauf ist in der Zeichnung nicht dargestellt. Aus dem Reaktor (25) wird das heiße Wirbelgas über die Leitung (31) in den Kondensator (32) geführt, wo sich das Quecksilber in flüssiger Form niederschlägt. Das flüssige Quecksilber verläßt den Kondensator (32) über die Leitung (33), während die den Kondensator (32) verlassende Luft über die Leitung (34) in die Müllverbrennungsanlage (1) zurückgeführt wird. Im Reaktor (25) werden die adsorbierten organischen Schadstoffe weitgehend oxidativ zersetzt.

Das dem Wirbelschichtreaktor (17) über die Leitungen (16a) und (16b) zugeführte Abgas hatte einen Quecksilbergehalt von 2 mg/Nm³, einen Gehalt an polyhalogenierten Dibenzodioxinen und Dibenzofuranen von 20 ng/Nm³ sowie einen Gehalt an PCB, PCP und PCA von insgesamt 10 µg/Nm³. Das in der Leitung (26) geführte Reingas hatte einen Quecksilbergehalt < 50 µg/Nm³, einen Gehalt an polyhalogenierten Dibenzodioxinen und Dibenzofuranen < 0,1 ng TE pro Nm³ sowie einen Gehalt an PCB, PCP und PCA von insgesamt < 1 µg/Nm³.

Dem Wirbelschichtreaktor (17) wurden über die Leitungen (16a) und (16b) insgesamt 600 Nm³ Abgas pro Stunde zugeführt. Im Wirbelschichtreaktor (17) befanden sich ständig 60 kg der Zeolith-Mischung. Im Zyklon (20) wurde pro Stunde 1 kg Zeolith-Mischung abgeschieden, wovon 0,9 kg in den Wirbelschichtreaktor zurückgeführt und 0,1 kg zur Regeneration in den Reaktor (25) gelangten. Mithin betrug der Zeolith-Verbrauch ca. 166 mg/Nm³ Abgas.

Es kann erforderlich sein, den Zyklon (20) in Form mehrerer Zyklonstufen auszuführen oder dem Zyklon (20) ein Filterelement nachzuschalten. Auf diese Weise kann der Reststaubgehalt des in der Leitung (26) geführten Reingases unter 5 mg/Nm³ abgesenkt werden. Die in der Leitung (24) geführte Zeolith-Mischung hat eine Schadstoffbeladung von ca. 2 Gew.-%.

Die Dotierung der Zeolithe mit Schwermetallsalzen erfolgt in der Weise, daß auf die heißen Zeolithe eine Metallsalzlösung gesprüht wird. Hierbei verdampft der Wassergehalt der Lösung, und es resultiert ein trockenes, mit Metallsalzen imprägniertes Produkt. Durch die Imprägnierung kann die Aufnahmekapazität für Quecksilber von max. 2 g auf max. 3 g erhöht werden.

## Patentansprüche

1. Verfahren zur Reinigung von sauerstoffhaltigen, bei der Verbrennung von Müll, Industrieabfällen und Klärschlamm anfallenden Abgasen, bei dem Quecksilber, Quecksilberverbindungen und polyhalogenierte Kohlenwasserstoffe durch Adsorption an Zeolithen aus den Abgasen entfernt werden, dadurch gekennzeichnet, daß die Abgase oberhalb des Taupunkts bei einer Temperatur von 80 bis 180°C und einer Gasgeschwindigkeit von 3 bis 20 m/s mit einer Mischung aus natürlich vorkommenden Zeolithen während einer Reaktionszeit von 0,5 bis 10 s in einer Gas-Feststoff-Suspension zur Reaktion gebracht werden, wobei die mittlere Teilchengröße d₅₀ der Zeolith-Mischung 5 bis 50 µm und die mittlere Suspensionsdichte der Gas-Feststoff-Suspension 0,02 bis 10 kg Feststoff pro Nm³ Abgas beträgt.

2. Verfahren nach Anspruch 1, dadurch gekennzeichnet, daß das Abgas bei einer Temperatur von 120 bis 140°C mit einer Mischung aus natürlich vorkommenden Zeolithen zur Reaktion gebracht wird.

3. Verfahren nach den Ansprüchen 1 bis 2, dadurch gekennzeichnet, daß die Mischung aus natürlich vorkommenden Zeolithen 10 bis 20 Gew.-% Mordenit, 60 bis 70 Gew.-% Clinoptilolit, 0 bis 5 Gew.-% Montmorillonit und Rest SiO₂ enthält.

4. Verfahren nach den Ansprüchen 1 bis 3, dadurch gekennzeichnet, daß die Mischung aus natürlich vorkommenden Zeolithen mit 0,1 bis 1 Gew.-% MnSO₄, FeSO₄, CoSO₄, NiSO₄ und/oder CuSO₄ dotiert ist.

5. Verfahren nach den Ansprüchen 1 bis 4, dadurch gekennzeichnet, daß die Mischung aus natürlich vorkommenden Zeolithen 10 bis 30 Gew.-% CaCO₃, CaO und/oder Ca(OH)₂ enthält.

6. Verfahren nach den Ansprüchen 1 bis 5, dadurch gekennzeichnet, daß die Reaktion in einer zirkulierenden Wirbelschicht abläuft, wobei die Gasgeschwindigkeit 3 bis 8 m/s, vorzugsweise 4 bis 5 m/s, und die mittlere Suspensionsdichte der Gas-Feststoff-Suspension 2 bis 10 kg Feststoff pro Nm³ Abgas beträgt.

7. Verfahren nach den Ansprüchen 1 bis 5, dadurch gekennzeichnet, daß die Reaktion in einem Flugstromreaktor abläuft, wobei die Gasgeschwindigkeit 6 bis 20 m/s und die mittlere Suspensionsdichte der Gas-Feststoff-Suspension 20 bis 200 g Feststoff pro Nm³ Abgas beträgt.

8. Verfahren nach den Ansprüchen 1 bis 7, dadurch gekennzeichnet, daß die mit den Schadstoffen beladene Zeolith-Mischung bei 300 bis 600°C in einer Wirbelschicht mit Luft als Wirbelgas behandelt und die aus der Wirbelschicht austretende Luft zur Abscheidung des Quecksilbers auf Raumtemperatur abgekühlt wird.

9. Verfahren nach den Ansprüchen 1 bis 7, dadurch gekennzeichnet, daß die mit den Schadstoffen beladene Zeolith-Mischung bei 800 bis 1300°C in einer Wirbelschicht mit Luft als Wirbelgas behandelt und die aus der Wirbelschicht austretende Luft zur Abscheidung des Quecksilbers auf Raumtemperatur abgekühlt wird.

## Claims

1. A method for the purification of oxygen-containing exhaust gases produced during the combustion of refuse, industrial waste and clarification sludge, in which mercury, mercury compounds and polyhalogenated hydrocarbons are removed from the exhaust gases by adsorption on zeolites, characterised in that the exhaust gases are reacted above the dewpoint at a temperature of 80 to 180°C and a gas velocity of 3 to 20 m/s with a mixture of naturally-occurring zeolites for a reaction period of 0.5 to 10 s in a gas/solids suspension, the average particle size d₅₀ of the zeolite mixture being 5 to 50 µm and the average suspension density of the gas/solids suspension being 0.02 to 10 kg solids per sm³ exhaust gas.

2. A method according to Claim 1, characterised in that the exhaust gas is reacted at a temperature of 120 to 140°C with a mixture of naturally-occurring zeolites.

3. A method according to Claims 1 to 2, characterised in that the mixture of naturally-occurring zeolites contains 10 to 20% by weight mordenite, 60 to 70% by weight clinoptilolite, 0 to 5% by weight montmorillonite and remainder SiO₂.

4. A method according to Claims 1 to 3, characterised in that the mixture of naturally-occurring zeolites is doped with 0.1 to 1% by weight MnSO₄, FeSO₄, CoSO₄, NiSO₄ and/or CuSO₄.

5. A method according to Claims 1 to 4, characterised in that the mixture of naturally-occurring zeolites contains 10 to 30% by weight CaCO₃, CaO and/or Ca(OH)₂.

6. A method according to Claims 1 to 5, characterised in that the reaction takes place in a circulating fluidised bed, the gas velocity being 3 to 8 m/s, preferably 4 to 5 m/s, and the average suspension density of the gas/solids suspension being 2 to 10 kg solids per sm³ exhaust gas.

7. A method according to Claims 1 to 5, characterised in that the reaction takes place in an entrained-bed reactor, the gas velocity being 6 to 20 m/s and the average suspension density of the gas/solids suspension being 20 to 200 g per sm³ exhaust gas.

8. A method according to Claims 1 to 7, characterised in that the zeolite mixture laden with the pollutants is treated at 300 to 600°C in a fluidised bed with air as fluidising gas and the air emerging from the fluidised bed is cooled to room temperature in order to separate off the mercury.

9. A method according to Claims 1 to 7, characterised in that the zeolite mixture laden with the pollutants is treated at 800 to 1300°C in a fluidised bed with air as fluidising gas and the air emerging from the fluidised bed is cooled to room temperature in order to separate off the mercury.

## Revendications

1. Procédé d'épuration d'effluents gazeux de combustion contenant de l'oxygène, formés lors de la combustion d'ordures ménagères, de déchets industriels et de boues de curage, le mercure, les composés de mercure et les hydrocarbones polyhalogénés étant séparés des effluents gazeux par adsorption sur des zéolithes,
caractérisé en ce que
les effluents gazeux sont, au-dessus du point de condensation, à une température comprise entre 80 et 180 °C et avec une vitesse de gaz de 3 à 20 m/s, mis à réagir sur un mélange de zéolithes naturelles pendant une durée de réaction de 0,5 à 10 s dans une suspension gaz-solide, la taille granulométrique moyenne d₅₀ du mélange de zéolithes étant de 5 à 50 µm et la densité moyenne de suspension de la suspension gaz/solide étant de 0,02 à 10 kg de matière solide par m³ normal d'effluents gazeux.

2. Procédé selon la revendication 1,
caractérisé en ce que le gaz est mis à réagir sur un mélange de zéolithes naturelles à une température de 120 à 140 °C.

3. Procédé selon les revendications 1 à 2,
caractérisé en ce que
le mélange de zéolithes naturelles contient de 10 à 20 % en poids de mordénite, 60 à 70 % en poids de clinoptilolite, 0 à 5 % en poids de montmorillonite et pour le reste du SiO₂.

4. Procédé selon les revendications 1 à 3,
caractérisé en ce que
le mélange de zéolithes naturelles est dopé avec 0,1 à 1 % en poids de MnSO₄, de FeSO₄, de CoSO₄, de NiSO₄, et/ou de CuSO₄.

5. Procédé selon les revendications 1 à 4,
caractérisé en ce que
le mélange de zéolithes naturelles contient de 10 à 30 % en poids de CaCO₃, de CaO et/ou de Ca(OH)₂.

6. Procédé selon les revendications 1 à 5,
caractérisé en ce que
la réaction se déroule dans un lit fluidisé circulant, où la vitesse des gaz est de 3 à 8 m/s, de préférence de 4 à 5 m/s, et la densité de suspension moyenne de la suspension gaz/solide est de 2 à 10 kg de matière solide par m³ normal d'effluents gazeux.

7. Procédé selon les revendications 1 à 5,
caractérisé en ce que
la réaction se déroule dans un réacteur à flux volant, la vitesse des gaz est de 6 à 20 m/s et la densité de suspension moyenne de la suspension gaz/solide est de 20 à 200 g de matière solide par m³ normal d'effluents gazeux.

8. Procédé selon les revendications 1 à 7,
caractérisé en ce que
que le mélange de zéolithes chargé des substances polluantes est traité dans un lit fluidisé par de l'air comme gaz fluidisant entre 300 °C et 600 °C et que l'air s'échappant du lit fluidisé est refroidi à température ambiante afin d'en séparer le mercure.

9. Procédé selon les revendications 1 à 7,
caractérisé en ce que
que le mélange de zéolithes chargé des substances polluantes est traité dans un lit fluidisé par de l'air comme gaz fluidisant entre 800 °C et 1300 °C et que l'air s'échappant du lit fluidisé est refroidi à température ambiante afin d'en séparer le mercure.
